# DEMANDE DE BREVET EUROPEEN

(11) **EP 1 923 335 A1**
(43) Date de publication de la demande: **21.05.2008**
(21) Numéro de dépôt: 07120493.7
(22) Date de dépôt: 12.11.2007
(51) Int. Cl.: B65G 17/00, B65G 17/24

(54) **Installation de convoyage d'une charge, à chemins de roulement parallèles**

(30) Priorité: 17.11.2006 FR 0610057
(71) Demandeur: Kaufler, 22600 Loudeac (FR)
(72) Inventeur: Corveler, Yvon, 56300, PONTIVY (FR); Champalaune, Jean-Claude, 35290, SAINT MEEN LE GRAND (FR)
(74) Mandataire: Warcoin, Jacques

(57) **Abrégé**

L'invention se rapporte à une installation de convoyage d'une charge (4), qui comprend deux chemins de roulement (2) parallèles généralement horizontaux, ainsi qu'une paire de chaînes (3) sans fin mobiles dont le brin supérieur (30) s'appuie sur le chemin de roulement (2) associé.

Elle se caractérise essentiellement par le fait que :
- chaque chaîne (3) est constituée de deux séries parallèles de maillons (32, 33) reliés deux à deux par un axe d'articulation transversal (34) sur lesquels est emmanché, fou en rotation, un rouleau cylindrique (36) dont au moins un tronçon de section constante, présente un diamètre, relativement à la taille des maillons (32, 33), tel que le brin supérieur (30) de ladite chaîne (3) repose sur ledit chemin de roulement (2) associé, par les génératrices inférieures du (des) tronçons des rouleaux (36), tandis que les génératrices supérieures dudit (desdits) tronçon(s) de ces mêmes rouleaux (36) constituent ensemble une surface de support de ladite charge (4) ;
- et qu'elle comprend des moyens motorisés (**M**) d'entraînement synchronisé desdites chaînes.

## Description

La présente invention concerne une installation de convoyage d'une charge.

Dans de nombreux secteurs de l'industrie se pose le problème du déplacement de charges lourdes d'un endroit à un autre.

Ainsi, par exemple, dans le domaine de l'industrie alimentaire se pose le problème du déplacement des unités de moulage de produits alimentaires carnés vers des cellules de cuisson appropriées.

C'est notamment le cas pour la cuisson de jambons. Ceux-ci sont habituellement disposés dans des unités de moulage du type comprenant un ensemble de moules en forme de goulottes, disposées horizontalement côte à côte et parallèlement les unes aux autres, leur fond étant dirigé vers le bas et leur ouverture vers le haut, cet ensemble de moules étant fixé à des moyens de support qui autorisent l'empilage des unités les unes sur les autres.

A titre indicatif, un ensemble à déplacer peut comporter plus d'une dizaine d'unités de moulage empilées.

Le poids de cet ensemble est très élevé et peut atteindre 2 tonnes à 2,5 tonnes.

On a bien entendu pensé à déplacer ce genre d'ensemble à l'aide de manipulateurs mécaniques dont la paire de fourches vient saisir l'unité la plus basse par le dessous en supportant les goulottes inférieures.

Cependant, de tels manipulateurs ne sont pas adaptés à la mise en place des unités à l'intérieur des cellules de cuisson, en particulier pour des raisons d'encombrement.

On connaît par ailleurs des installations de convoyage de charges qui comprennent deux chemins de roulement parallèles ainsi qu'une paire de chaînes sans fin mobile dont le brin supérieur s'appuie sur le chemin de roulement associé.

Ces chaînes jouent le rôle de porte charge.

Toutefois, avec ce genre d'installation la puissance qui est nécessaire de mettre en place pour déplacer les chaînes est très importante car les phénomènes de frottement sont très élevés en raison du poids de la charge à déplacer.

On décrit dans le document US-A-4 930 623 une installation de convoyage qui aussi bien dans le mode de réalisation de la figure 9 que dans celui de la figure 10, est formée de chaînes qui comportent des rouleaux constitués de portions cylindriques de diamètres différents.

Dans les deux cas, ce sont les génératrices inférieures de la (des) portion(s) de plus petit diamètre qui prennent appui, non pas sur le chemin de roulement associé, mais sur un amortisseur en caoutchouc intégré à ce chemin, Par ailleurs, les génératrices les plus hautes de la (des) portion(s) de plus grand diamètre constituent ensemble une surface de support d'une charge.

La présente invention vise à résoudre ces problèmes en proposant une installation de convoyage d'une charge du type précisé ci-dessus, avec laquelle la puissance à mettre en oeuvre pour déplacer les charges est peu importante au regard du poids de celle-ci, et avec laquelle les problèmes de frottements sont réduits au maximum.

La présente invention se rapporte donc à une installation de convoyage d'une charge, qui comprend deux chemins de roulement parallèles généralement horizontaux, ainsi qu'une paire de chaînes sans fin mobiles dont le brin supérieur s'appuie sur le chemin de roulement associé.

Cette installation se caractérise essentiellement par le fait que :
- chaque chaîne est constituée de deux séries parallèles de maillons reliés deux à deux par un axe d'articulation transversal sur lesquels est emmanché, fou en rotation, un rouleau cylindrique dont au moins un tronçon de section constante, présente un diamètre, relativement à la taille des maillons, tel que le brin supérieur de ladite chaîne repose sur ledit chemin de roulement associé, par les génératrices inférieures du(des) tronçon(s) des rouleaux, tandis que les génératrices supérieures dudit (desdits) tronçon(s) de ces mêmes rouleaux constituent ensemble une surface de support de ladite charge;
- et en ce qu'elle comprend des moyens motorisés d'entraînement synchronisé desdites chaînes.

Des chenillettes constituées de telles séries parallèles de maillons reliés deux à deux par un axe d'articulation transversal sur lequel est emmanché, fou en rotation, un rouleau cylindrique, sont connues en soi.

Ces chenillettes constituent des éléments autonomes utilisés par exemple pour déplacer les charges lourdes. Pour ce faire, des chenillettes sont positionnées au sol. La charge est alors mise en place sur les chenillettes et l'ensemble peut alors être déplacé manuellement, sans effort démesuré.

Le présent demandeur s'est rendu compte que si l'on utilise ce type de structure sous la forme de paire de chaînes sans fin mobiles coopérant avec deux chemins de roulement parallèles, il est possible de déplacer de manière synchronisée ces chaînes à l'aide de moyens motorisés d'entraînement, en délivrant une puissance très faible au regard du poids des charges à déplacer.

Le demandeur s'est aperçu que ceci est rendu possible par le fait que les efforts résultant du poids élevé des charges sont repris par chacun des rouleaux cylindriques intégrés dans chacune des chaînes, ces rouleaux présentant, en quelque sorte, une surface portante (matérialisée par leur génératrice supérieure) et une surface portée (matérialisée par leur génératrice inférieure).

Par ailleurs, ce type de chaîne étant de préférence réalisé en acier inoxydable, leur entretien est particulièrement facile et économique.

Par l'expression "rouleau dont au moins un tronçon de section constante..", on entend aussi bien un rouleau qui présente une section constante sur toute son étendue longitudinale, qu'un rouleau présentant au moins un changement de section sur son étendue longitudinale. Des exemples de ce dernier type de rouleaux sont constitués d'une part par un rouleau formé de deux tronçons de diamètre identique qui encadrent un tronçon central de plus grand diamètre, ou par un rouleau dans lequel est formé une série de gorges annulaires.

Selon d'autres caractéristiques avantageuses et non limitatives de cette installation :
- ledit rouleau présente une section constante sur toute son étendue longitudinale ;
- chaque chaîne engraine avec un pignon relié aux dits moyens motorisés d'entraînement ;
- elle comprend un axe entrainé en rotation sur lui-même par les dits moyens motorisés d'entraînement, sur lequel sont calés lesdits pignons ;
- ledit axe est constitué d'un tube creux dans lequel sont logés lesdits moyens motorisés d'entraînement ;
- ledit axe est constitué d'un arbre motorisé ;
- ledit axe est décalé longitudinalement par rapport à l'extrémité proximale des chemins de roulement;
- lesdits chemins de roulement comportent des moyens visuels de positionnement de la charge et que ledit axe est situé au-delà de ces moyens ;
- lesdites chaînes comportent des éléments de rive disposés du coté externe des chemins de roulement.

D'autres caractéristiques et avantages de la présente invention apparaîtront à la lecture de la description détaillée qui va suivre. Elle sera faite en référence aux dessins annexés dans lesquels :
- la figure 1 est une vue en perspective, d'une installation selon l'invention, recevant une charge à convoyer ;
- la figure 2 est une vue de face de l'installation de la figure 1;
- la figure 3 est une vue de côté d'une portion de chaîne qui fait partie intégrante de l'installation de l'invention ;
- la figure 4 est une vue en perspective de cette même portion de chaîne ;
- la figure 5 est une vue en bout de cette portion de chaîne, selon la direction de la flèche V de la figure 4 ;
- la figure 6 est une vue de côté de ladite installation ;
- la figure 7 est une vue de détail de l'installation de la figure 7, montrant plus particulièrement les moyens d'entraînement des chaînes ,
- la figure 8 est une vue de détail de l'installation de la figure 2.

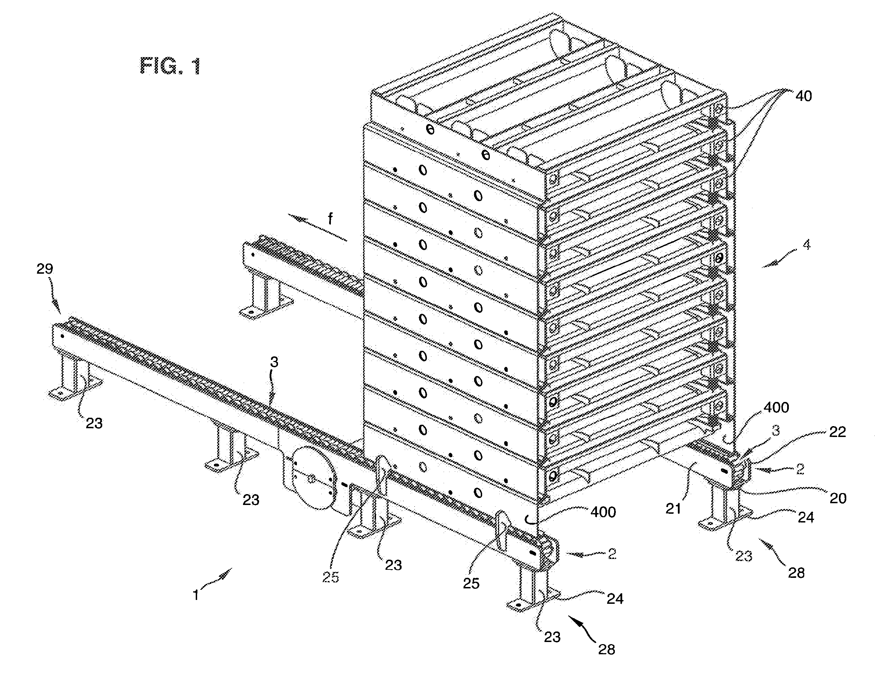

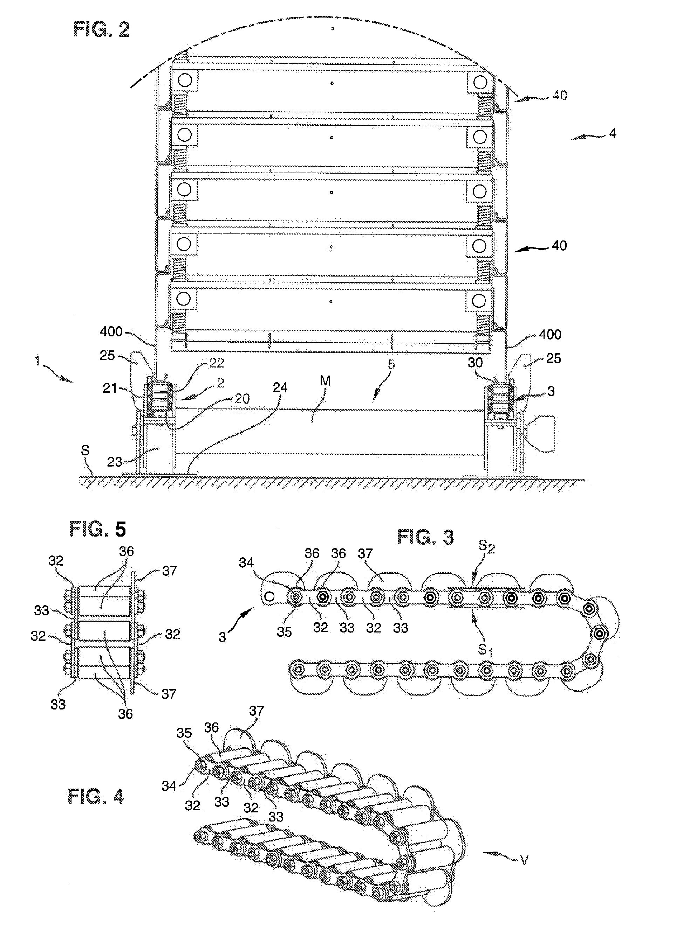

Aux figures 1 et 2 annexées est représentée une installation selon l'invention, qui reçoit une charge à convoyer.

Cette charge est constituée d'un ensemble de moulage 4 du type décrit plus haut, comprenant une superposition d'unités de moules 40 en forme de goulottes.

L'installation de l'invention est essentiellement constituée de deux chemins de roulement parallèles 2, généralement horizontaux, et d'une paire de chaînes sans fin mobiles 3, dont le brin supérieur 30 s'appuie sur le chemin de roulement associé.

Comme montré sur les figures précitées, les deux chemins de roulement 2, de préférence en acier inoxydable, comprennent une structure longitudinale à section en forme de "U" dont l'ouverture est tournée vers le haut. Ce "U" comprend une base horizontale 20 et deux ailes parallèles verticales 21 et 22.

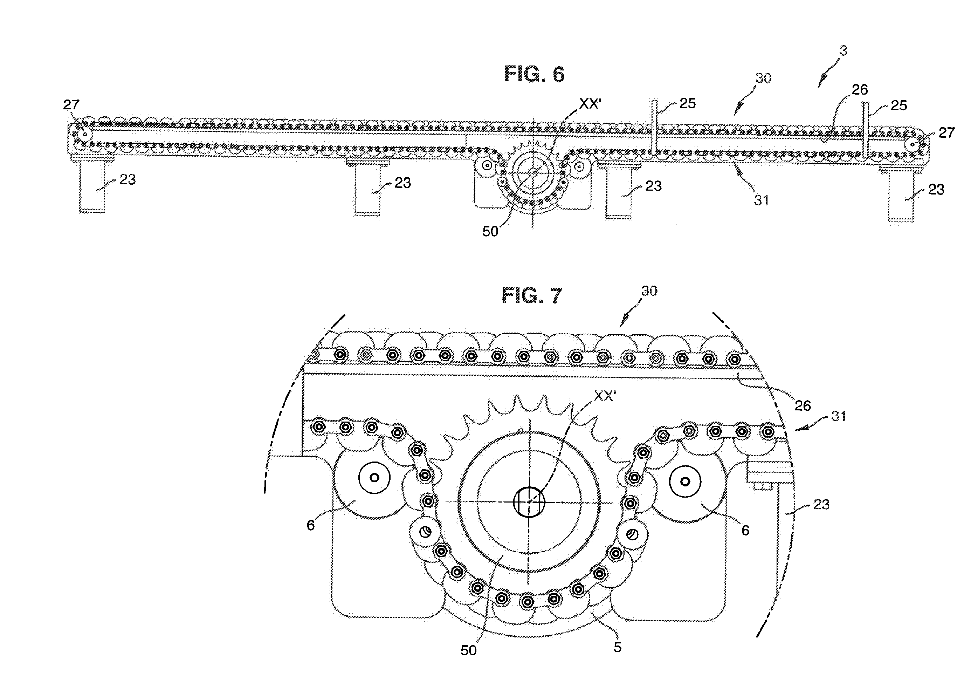

Ainsi que cela est visible seulement aux figures 6 et 7, une plaque horizontale 26, parallèle à la base 20, s'étend non loin, c'est à dire au voisinage de l'extrémité libre des ailes 21 et 22.

On en expliquera plus loin la fonction.

Les deux chemins de roulement 2 reposent sur une série de pieds 23 dont la partie inférieure a la forme d'une embase 24 comportant des ouvertures pour leur fixation éventuelle au sol S.

Par convention, on a référencé 28 à la figure 1 l'extrémité proximale des chemins de roulement et par 29 leur extrémité distale.

Comme on le verra plus loin, les charges à déplacer sont positionnées sur les chemins de roulement du côté de leur extrémité proximale, tandis qu'une cellule de cuisson non représentée est prévue dans la continuité des extrémités distales.

Bien entendu, l'écartement mutuel entre les deux chemins de roulement est adapté en fonction de la largeur des charges à déplacer.

Comme indiqué plus haut, l'installation comprend une paire de chaînes sans fin mobile 3 dont le brin supérieur 30 s'appuie sur le chemin de roulement 2 associé.

Ainsi que le montre plus particulièrement la figure 6, chaque chaîne 3 est mise en place sur le chemin de roulement associé 2, entre des galets d'extrémité 27 qui sont placés au plus près des extrémités proximale et distale 28 et 29.

Le brin inférieur 31 de chaque chaîne 3 engrène avec un pignon 50 sur lequel on reviendra plus loin.

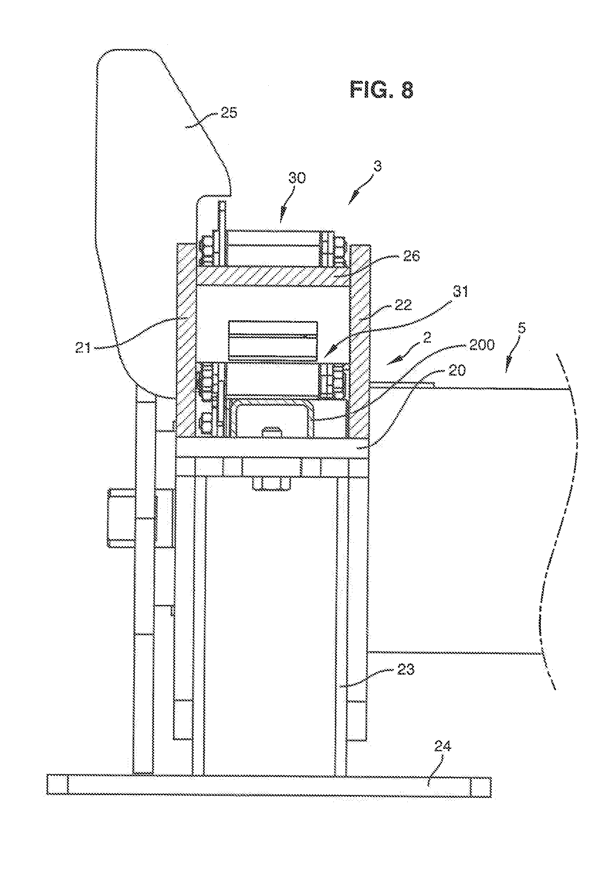

Ainsi que cela est également montré sur les figures, le brin supérieur 30 de chaque chaîne 3 s'appuie sur la plaque 26 dont il a été fait état plus haut. Le brin inférieur s'appuie, quant à lui sur un fer en forme de "U" inversé, référence 200 à la figure 8.

On se reportera maintenant aux figures 3 à 5 pour expliciter la structure des chaînes 3.

Une seule d'entre elles est visible sur ces figures, mais il est bien entendu que la seconde est rigoureusement identique.

Cette chaîne est donc constituée de deux séries parallèles de maillons extérieurs 32 et intérieurs 33, qui sont reliés deux à deux par un axe d'articulation transversal 34 dont les extrémités traversent des ouvertures prévues dans les maillons, lesquelles reçoivent des écrous 35.

Sur chacun des axes 34 est emmanché, fou en rotation, un rouleau cylindrique 36. Il est clair que ce rouleau peut se mouvoir en rotation sur lui-même, mais qu'il est bloqué en translation par les maillons qui, en quelque sorte, l'emprisonne.

Il s'agit d'un mode de réalisation préférentiel mais non limitatif, dans lequel le rouleau présente une section identique sur toute son étendue longitudinale.

Bien entendu, tous les rouleaux 36 présentent un diamètre identique. Celui-ci est tel, relativement à la taille des maillons 32 et 33, que le brin supérieur 30 de la chaîne 3 repose sur la plaque 26 du chemin de roulement 2 uniquement par les génératrices inférieures de ces rouleaux 36, tandis que leurs génératrices supérieures constituent ensemble une surface de support de la charge à déplacer.

Ainsi, à la figure 3, on a nommé S₁ la surface d'appui des génératrices inférieures des rouleaux sur la plaque 26, et par S₂ la surface d'appui de la charge à transporter.

Sur un même côté de la chaîne, les maillons intérieurs 33 sont remplacés par des éléments de rive 37. Il s'agit aussi de maillons, mais qui se prolongent verticalement bien au-delà des génératrices supérieures des rouleaux 36.

Ils sont placés du côté extérieur de la chaîne, c'est à dire sur le côté disposé au voisinage de l'aile 22 des chemins de roulement 2.

On comprendra plus loin leur fonction.

Bien entendu, dans un mode de réalisation non représenté, les éléments 37 peuvent être absents.

En se reportant à nouveau aux figures 6 et 7, on constate, comme précisé plus haut que le brin inférieur 31 de chaque chaîne 3 engrène avec un pignon 50.

Ces pignons sont reliés à des moyens motorisés d'entraînement des chaînes. Ils peuvent par exemple consister en un arbre motorisé.

Sur les figures, ces moyens motorisés M sont disposés à l'intérieur d'un axe transversal 5 constitué d'un tube creux, l'axe 5 étant entraîné en rotation sur lui-même, c'est-à-dire autour de l'axe transversal X-X', par lesdits moyens motorisés d'entraînement.

L'axe 5 porte les pignons 50.

A la figure 7 sont particulièrement visibles des galets de renvoi 6 qui dirigent le brin 31 en direction du pignon 50.

On notera que l'axe 5 est décalé longitudinalement par rapport à l'extrémité proximale 28 des chemins de roulement. Ceci s'explique par le fait que l'opérateur qui amène la charge sur l'installation ne doit pas être gêné dans sa manoeuvre par la présence de l'axe.

De préférence, l'axe s'étend juste après la zone de chargement de l'installation.

On notera que les ailes extérieures 22 des chemins de roulement comportent, du côté des extrémités proximales 28, des doigts dirigés vers le haut 25 dont la fonction est notamment de renseigner l'opérateur sur le bon positionnement de la charge 4 à mettre en place.

Bien entendu, l'axe 5 est avantageusement placé au-delà de ces repères visuels 25.

Lorsque l'opérateur souhaite disposer une charge 4 telle que celle représentée sur les figures, sur l'installation, il manipule celle-ci avec un chariot à fourches et présente la pile de telle manière que les pieds 400 de l'unité inférieure viennent reposer sur le brin supérieur 30 des chaînes 3.

Les doigts 25 qui ont été décrits plus haut le renseignent sur le bon positionnement qu'il a effectué. De plus, ces doigts comportent un pan coupé qui l'aide dans sa manipulation.

Les moyens motorisés M peuvent alors être mis en route de manière à déplacer la charge 4 dans la direction de la flèche f, c'est-à-dire vers la cellule de cuisson.

Bien entendu, la charge est déplacée à une vitesse qui tient compte non seulement de la vitesse de rotation de l'axe 5 sur lui-même, mais également de la vitesse de glissement de la charge sur les rouleaux 36 des chaînes.

Grâce à l'installation de l'invention, il est possible de déplacer des charges importantes, moyennant une faible puissance des moyens motorisés.

Ainsi à titre d'exemple, pour déplacer une charge de l'ordre de 2 tonnes à 2,5 tonnes, il est suffisant de fournir une force de traction de l'ordre de 250 N pour obtenir une vitesse de déplacement égale à 4 mètres/minute.

## Revendications

1. Installation de convoyage d'une charge (4), qui comprend deux chemins de roulement (2) parallèles généralement horizontaux, ainsi qu'une paire de chaînes sans fin mobiles (3) dont le brin supérieur (30) s'appuie sur le chemin de roulement (2) associé, **caractérisée par le fait que**
- chaque chaîne (3) est constituée de deux séries parallèles de maillons (32, 33) reliés deux à deux par un axe d'articulation transversal (34) sur lesquels est emmanché, fou en rotation, un rouleau cylindrique (36) dont au moins un tronçon de section constante, présente un diamètre, relativement à la taille des maillons (32, 33), tel que le brin supérieur (30) de ladite chaîne (3) repose sur ledit chemin de roulement (2) associé, par les génératrices inférieures du (des) tronçons des rouleaux (36), tandis que les génératrices supérieures dudit (desdits) tronçon(s) de ces mêmes rouleaux (36) constituent ensemble une surface de support de ladite charge (4) ;
- et en ce qu'elle comprend des moyens motorisés (M) d'entraînement synchronisé desdites chaînes (3).

2. Installation selon la revendication 1, **caractérisé par le fait que** ledit rouleau (36) présente une section constante sur toute son étendue longitudinale.

3. Installation selon la revendication 1 ou 2, **caractérisée par le fait que** chaque chaîne (3) engraine avec un pignon (50) relié aux dits moyens motorisés d'entraînement (M).

4. Installation selon la revendication 3, **caractérisée par le fait qu'**elle comprend un axe (5) entraîné en rotation sur lui-même par les dits moyens motorisés d'entraînement, sur lequel sont calés lesdits pignons (50).

5. Installation selon la revendication 4, **caractérisée par le fait que** ledit axe (5) est constitué d'un tube creux dans lequel sont logés lesdits moyens motorisés d'entraînement (M).

6. Installation selon la revendication 4, **caractérisé par le fait que** ledit axe est constitué d'un arbre motorisé.

7. Installation selon l'une des revendications 4 à 6, **caractérisée par le fait que** ledit axe (5) est décalé longitudinalement par rapport à l'extrémité proximale (28) des chemins de roulement (2).

8. Installation selon la revendication 7, **caractérisée par le fait que** lesdits chemins de roulement (2) comportent des moyens visuels (25) de positionnement de la charge (4) et que ledit axe (5) est situé au-delà de ces moyens (25).

9. Installation selon l'une des revendications précédentes, **caractérisée par le fait que** lesdites chaînes (3) comportent des éléments de rive (37) disposés du coté externe des chemins de roulement (2).
